# EUROPEAN PATENT APPLICATION

(11) **EP 1 009 156 A2**
(43) Date of publication of application: **14.06.2000**
(21) Application number: 99309961.3
(22) Date of filing: 10.12.1999
(51) Int. Cl.: H04M 19/00

(54) **Device and method for local power and signal feeding into subscriber lines**

(30) Priority: 10.12.1998 US 208379
(71) Applicant: Tadiran Telecommunications Limited, Petah-Tikva 49104 (IL)
(72) Inventor: Natra, Gabi, 69341 Ramat Aviv (IS); Lebovits, Erwin, 44280 Kfar Saba (IS)
(74) Representative: Fenlon, Christine Lesley

(57) **Abstract**

A device and method is provided for power and signal feeding into telephone lines at the subscriber end of the line, relieving the telephone network of providing the high power signals, such as the AC ringing voltage and the DC loop current, needed for the operation of the telephone set and for the communication between the telephone set and the telephone network. The device generates the AC ringing voltage, triggered by a special low power signal from the telephone network, such as a special tone signal outside the voice band, or a special DC current signal with different current levels for the ringer off and for the ringer on states. The device also senses the hook state of the telephone set and generates a signal back on the line to the telephone network, indicating whether the telephone is hooked on or off. This signal back to the telephone network can be either a DC current with different current levels for the on-hook and for the off-hook states, or special tone signals outside the voice band, different for the on-hook and for the off-hook states. As an option, the device can also power the subscriber line interface circuitry in the network termination unit. The device is fed locally from the mains electricity supply, with appropriate mechanism, such as a back-up battery, to continue working during power outages.

## Description

The present invention relates to power and signal feeding into subscriber lines and, more particularly, to a device and method for local power and signal feeding at the subscriber end of telephone lines for analog telephones connected via metallic wires to the telephone network, either through a certain network termination unit or directly to the telephone exchange.

Advanced networking technologies enable high volume of data and voice transmission over a small number of pairs of metallic wires, usually copper wires, and even over a single pair of wires known as a pair gain system. It is then common to use systems based on the xDSL digital transmission techniques, like the High bit rate Digital Subscriber Line (HDSL) technology (standard ETR152 TS101135 V1.4.1 (1998-02)), or on any other technology that transmits multiple phone calls over a single pair of wires or over optic fibers. An example of a typical system of this kind is the Multigain 2000 pair gain system of Tadiran Telecommunications Ltd., with remote power feeding from the exchange side unit via the line, including power required to operate the network termination units (called "remote units" in this example) as well as the end user telephones, where every telephone line requires a DC loop current as well as an AC ringing voltage. Such a remote power feeding of an outdoor network termination unit, has the advantages of avoiding the need of connection to street transformers, of using back-up batteries and of the maintenance required thereof. However, typically a power supply via the line between the exchange side unit and the network termination unit of over 150 VDC is required, taking into account the attenuation over a few kilometers long line. Thus, such telephone systems have a significant drawback since there are safety concerns when sending voltages greater than 120 Volts over the line, as is formulated for instance by the European standard EN 6950.

A need for relieving the telephone exchange of generating the power and signals required for the operation of the telephone set, and of delivering the power and signals over the line to the network termination unit, is encountered also in fiber optic based telephone networks. In fiber optic based telephone networks, it is not possible to send DC current and AC ringing voltage over the fiber optic cable, and these signals must be locally generated at the network termination unit (called "curbside unit" or "subscriber interface unit" in this domain). And indeed, there are several patents, for example U.S. Pat. No. 5,321,596, dealing with locally powered subscriber interface units (SIU), concentrating particularly with various methods for local generation at the SIU of the AC ringing voltages for the telephone sets connected to the SIU. However, locally powered SIU's have the aforementioned drawback that is avoided in case of remotely powered network termination units. Namely, locally powered outdoor SIU's require connection to street transformers, back-up batteries and the maintenance required thereof.

There is thus a widely recognized need for, and it would be highly advantageous to have, particularly for metallic wired telephone networks, a device and method for generating locally, at the subscriber end of the telephone line, all the signals and power required for the operation of the telephone set and for the communication of the telephone set with the network termination unit or with the telephone exchange directly, thus keeping the benefits of remotely powered network termination units, with the advantage that since only the network termination unit itself is powered optionally from the exchange side unit, then consequently less power of only up to 120 Volts is required over the line. Another advantage of the lower power required over the line; is that the range of the xDSL systems can be extended significantly. Furthermore, another benefit of locally powered subscriber lines, is that each customer pays for his own power used in the telephone system.

An embodiment of the present invention can provide a device and method to satisfy the aforementioned need.

According to an embodiment of a first aspect of the present invention there is provided a device for power and signal feeding into a subscriber line between a telephone network and a telephone set in a certain hook state, either on-hook state or off-hook state, and in a certain ringing condition, either ringing-off condition or ringing-on condition, including: (a) an isolation mechanism for coupling the telephone set to the telephone network only with respect to audio signals in a voice band; (b) a mediation mechanism, coupled to the isolation mechanism, for mediating control signals between the telephone set and the telephone network; and (c) a power supply for powering the telephone set and the mediation mechanism.

According to an embodiment of a second aspect of the present invention there is provided a method for coupling a telephone set, in a certain hook state, either on-hook state or off-hook state, and in a certain ringing condition, either ringing-off condition or ringing-on condition, to a telephone network, including the steps of (a) providing: (i) an isolation mechanism for coupling the telephone set to the telephone network only with respect to audio signals in a voice band; and (ii) a mediation mechanism, coupled to the isolation mechanism, for mediating control signals between the telephone set and the telephone network; (b) exchanging the audio signals between the telephone set and the telephone network via the isolation mechanism; and (c) exchanging the control signals between the telephone set and the telephone network via the mediation mechanism.

A device embodying the present invention may be a small, compact, reliable and easy to operate unit, powered locally from the mains electricity supply. Preferably, it is located at the subscriber side which is typically at a household. A device embodying the present invention may be connected via metallic wires, such as copper wires, from one side to the telephone set and from the other side to the telephone network. The connection to the telephone network can be either directly to telephone exchange, or to a network termination unit which is a remote unit that is itself connected to the telephone exchange.

A device embodying the present invention can provide the current and signals needed for the operation of the telephone set and for the communication between the telephone set and the telephone network. This includes the DC loop current, the AC ringing voltage for signaling the telephone set, and an on/off hook signal indicating to the telephone network whether the telephone set is hooked on or hooked off.

According to the preferred embodiments of the invention described below, the generation of the AC ringing voltage is activated by a signal that should be sent from the telephone network. This activating signal can be a special tone signal outside the voice band, preferably below voice band. According to features in preferred embodiments of the invention described below, the detection of the activating signal is based on a band-pass filter with cut-on and cut-off boundaries matched with the expected frequency of the activating signal. Alternatively, signaling the device of the present invention to generate the AC ringing voltage can be done by a special DC current signal sent by the telephone network with different current levels for indicating ringing-off and ringing-on conditions.

According to different embodiments of the invention described below, the signaling to the telephone network of the hook condition of the telephone set is by DC line current with different current levels for the on-hook and for the off-hook states, or by special tone signals outside the voice band.

According to further features in preferred embodiments of the invention described below, the subscriber line interface circuitry in the network termination unit can be optionally powered from the subscriber side by DC power fed into the line from a device embodying the present invention. Thus, with this option even less current is required to power the network termination unit over the line from the exchange side unit. This situation is also advantageous for fiber optic based telephone networks.

According to yet further features in preferred embodiments of the invention described below, an optional back-up battery is used for operation of the device during power outages of the mains electricity supply at the subscriber side. The back-up battery is charged with power supplied by the mains electricity supply during normal operation of the device.

According to still further features in the described preferred embodiments, a simple mechanism such as indicator light is sufficient to notify the subscriber that the unit is in good order, while absence of the light will indicate to call service or to replace the back-up battery. A simple battery replacement every few years, which can also be done by the subscriber himself, is the only maintenance requirement.

Since in an embodiment of the present invention the network termination unit is relieved of powering the telephone line, it is sufficient ot remotely power the network termination unit with a voltage over the line of less than 120 Volts supplied from the exchange side unit, thus meeting the aforementioned safety regulations. Another advantage of this situation is that since the network termination unit need not power the telephone line, the telephone set may be placed up to about 4 km from the network termination unit, which itself is typically able to be placed at a significant distance from the telephone exchange (up to about 3 km for a single pair xDSL transmission), allowing for a total stretch over 7 km from the telephone set to the telephone exchange without a repeater unit.

Reference will now be made, by way of example only, to the accompanying drawings, wherein:
FIG. 1 shows a schematic configuration of a telephone system including a device embodying the present invention; and
FIG. 2 is a schematic block diagram of a preferred embodiment of a device embodying the present invention.

The present invention relates to a device and method for power and signal feeding into subscriber lines. Specifically, an embodiment of the present invention can be used to provide the power and signals needed for the operation of the telephone set and for the communication between the telephone set and the telephone network

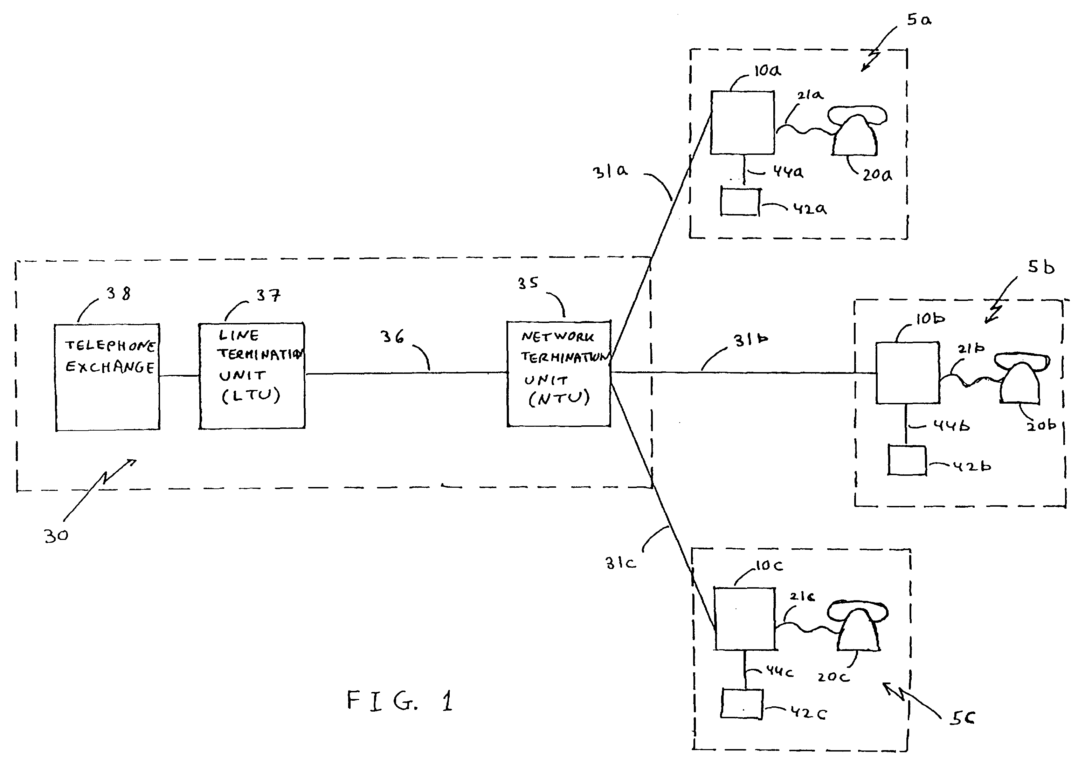

Referring now to the drawings, Fig. 1 shows a schematic configuration of a telephone system depicting 3 subscriber facilities, **5a, 5b** and **5c**, connected to a telephone network **30** via cables **31a, 31b** and **31c**, respectively. In this example, the connections of subscriber facilities **5a, 5b** and **5c** are to a network termination unit (NTU) **35**. Network termination unit **35**, as part of telephone network **30**, is itself connected to a telephone exchange **38** via a cable **36** to a line termination unit (LTU) **37** located in the vicinity of telephone exchange **38**.

Referring further to Fig. 1, subscriber facilities **5a, 5b** and **5c** include units **10a, 10b** and **10c**, respectively, for providing power and signals to the corresponding subscriber line. Units **10a, 10b** and **10c** are fed locally, at the corresponding subscriber side, from external electricity supply sources, usually AC mains electricity supply, **42a, 42b** and **42c**, respectively, via cables **44a, 44b** and **44c**, respectively. Units **10a, 10b** and **10c** are connected from one side to telephone network **30** as described above, and from the other side to telephone sets **20a, 20b** and **20c**, respectively, via cables **21a, 21b** and **21c**, respectively.

As to the distance between the various elements in the telephone system, network termination unit **35** can be. placed up to about 3 km away from line termination unit **37** for a single pair xDSL transmission. Furthermore, since network termination unit **35** need not power the telephone lines, each of telephone sets **20a, 20b** and **20c** may be placed up to about 4 km from network termination unit **35**, thus allowing for a total distance of over 7 km from each of telephone sets **20a, 20b** and **20c** to telephone exchange **38** without a repeater unit.

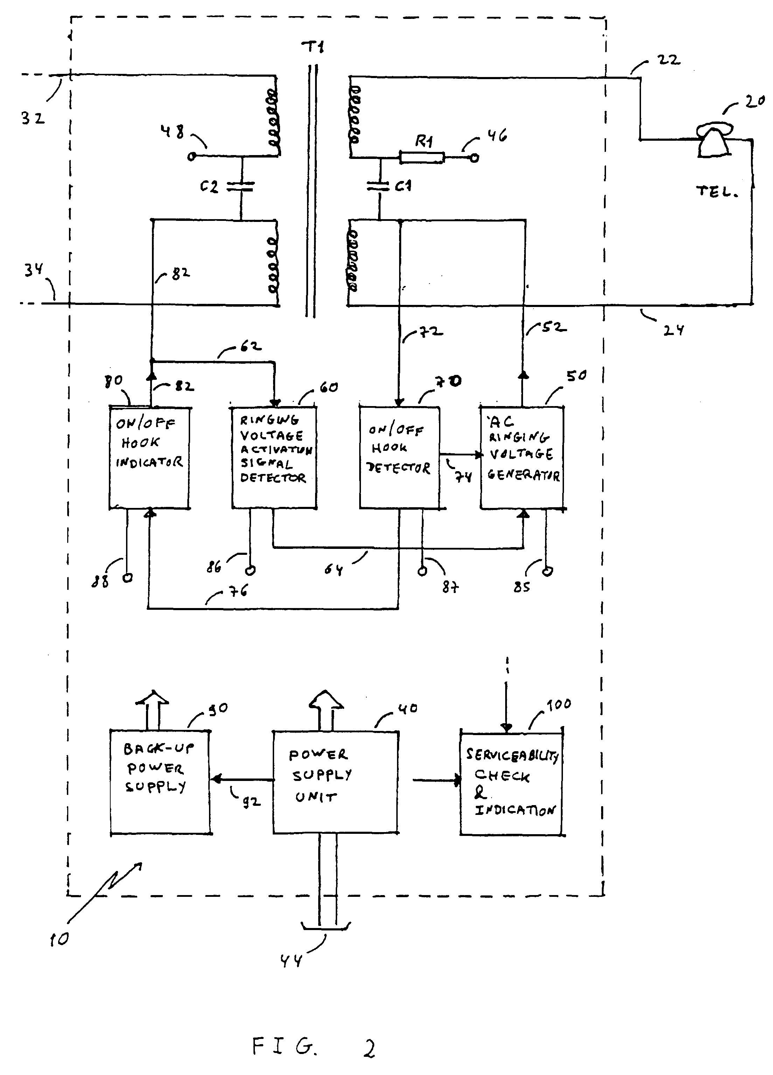

FIG. 2 is a schematic block diagram of a preferred embodiment of the device of the present invention. A unit **10** for providing power and signals to the subscriber line is connected from one side to a telephone set **20** via a pair of wires **22** and **24** that constitute cable **21**, and from the other side to a telephone network via a pair of wires **32** and **34** that constitute cable **31**. A transformer **T1** isolates the DC loop currents between the telephone set and the telephone network. However, audio signals are still transmitted back and forth between the telephone set and the telephone network.

A power supply unit **40** is fed from an external electricity supply source, usually an AC mains electricity supply, via an input cable **44**. Power supply unit **40** supplies the power needed to operate all the electronic circuits and modules of unit **10**. Among them are the DC voltages of typically **48** Volts, needed for generating the DC loop current in the line to the telephone set and in the line to the telephone network. These DC voltages are supplied via input lines **46** and **48**, respectively. A resistor **R1** is used for achieving the right line impedance, and capacitors **C1** and **C2** are used for blocking the DC current from flowing in the wrong direction. As an option, the DC voltage supplied via input line **48** can also be used to power the subscriber line interface circuitry (SLIC) in the network termination unit. The network termination unit itself should then perform the DC to DC conversions required for powering the SLIC. (DC to DC conversions is a common procedure as in the case of remote power feeding from the exchange side unit). Furthermore, an appropriate back-up and/or reboot mechanism should be implemented in the network termination unit, so that whenever the power supply from unit **10** revives, after a power failure of unit **10** and/or disconnection of unit **10** from the network termination unit, the SLIC goes through rebooting, wherein it does its initialization, and then checks out the condition of the subscriber line, and of the attached unit **10** and telephone set.

Referring further to FIG. 2, a ringing voltage module **50** generates an AC ringing voltage in the range between 40 to 150 Volts RMS, with a typical value of 75 Volts RMS, and a frequency in the range between 20 to 40 Hz, with a typical value of 20 or 25 Hz, and sends this AC ringing voltage to the telephone set via a path **52** for signaling the ringer thereof. Thus, the telephone exchange is relieved of generating and sending this high power AC ringing voltage over the line to the telephone set. Instead of the AC ringing voltage itself, the telephone network sends a signal to unit **10** to activate module **50** for generating the AC ringing voltage. Such an activating signal can be a special tone signal outside the voice band. In this case, a detection module **60** for detecting the activating signal for AC ringing voltage generation, is provided to detect such a ringing tone signal with a frequency of about 250 Hz, received over a path **62**. Detection module **60** includes for this purpose a band-pass filter with cut-on and cut-off frequencies matched with the expected frequency of the ringing tone signal. Thus, a cut-off frequency of about 300 Hz, which is low enough below voice band and some other audio tone signals such as dialing tone, calling tone or busy tone, is suitable. Signaling module **50** to generate the AC ringing voltage is done then via a path **64**. Another way of signaling unit **10** to activate module **50** for generating the AC ringing voltage, is by a special DC current signal sent by the telephone network. In this case, detection module **60** is intended to detect such a DC current signal with different current levels for indicating ringing-off and ringing-on conditions.

According to another feature of the preferred embodiment of the present invention, a hook state detector module **70** detects whether the telephone set is hooked on or off. Module **70** senses the telephone line over a path **72**, and informs module **50** over a path **74** to stop generating the AC ringing voltage when the telephone is hooked off. Furthermore, module **70** also informs a hook state indicator module **80**, via a path **76**, about the hook state of the telephone set. Module **80** in turn informs the telephone exchange about the hook state of the telephone set. This is done by sending signals depending on the hook state via a path **82** to the line to the telephone exchange. Signaling the telephone exchange can be done by sending DC current signals into the line to the telephone network with different DC current levels for the on-hook and for the off-hook states. For example, DC current levels of about 10 mA for the on-hook state and about 25 mA for the off-hook state are suitable. The telephone network must be able to detect the difference between the two current levels, and then to react accordingly, for instance to stop signaling unit 10 to activate module 50 for generating the AC ringing voltage, when the telephone set is hooked off. Another way of signaling the telephone network about the hook state of the telephone set, is by special tone signals, outside the voice band, which are different for the on-hook and off-hook states.

Other control signals which are in the voice band, such as DTMF dialing tones which are generated by telephone set **20** to signal the telephone network of a requested phone number, are passed by transformer **T1**, allowing for dialing.

As already mentioned above, power supply unit **40** supplies the power needed to operate all the electronic circuits and modules of unit **10**. Thus, the power needed to operate modules **50, 60, 70** and **80** is supplied over paths **85, 86, 87** and **88**, respectively.

Another feature of the preferred embodiment of the present invention, is to enable unit **10** to operate during power outages of the external electricity supply source. This can be achieved by including a back-up power supply module **90**. Preferably, module **90** includes a back-up battery which is charged with power supplied from power supply unit **40** via a path **92** during normal operation of unit **10**, namely when power supply unit **40** is fed from an external electricity supply source **42**.

Yet another important feature of the preferred embodiment of the present invention, is to have a serviceability check and indication module **100** which indicates whether unit **10** is in good order or that a service should be called. For example, a simple indicator light is sufficient to notify the subscriber that the unit is in good order, while absence of the light will indicate to call service or to replace the back-up battery. A simple battery replacement every few years, which can also be done by the subscriber himself, is the only maintenance requirement.

While the invention has been described with respect to a limited number of embodiments, it will be appreciated that many variations, modifications and other applications of the invention may be made.

## Claims

1. A device for power and signal feeding into a subscriber line between a telephone network and a telephone set in a certain hook state, comprising:
(a) an isolation mechanism for coupling the telephone set to the telephone network only with respect to audio signals in a voice band;
(b) a mediation mechanism, coupled to said isolation mechanism, for mediating control signals between the telephone set and the telephone network; and
(c) a power supply for powering the telephone set and said mediation mechanism.

2. The device of claim 1, wherein said mediation mechanism includes a mechanism for generating an AC ringing voltage for signaling the telephone set.

3. The device of claim 1, wherein said mediation mechanism includes a mechanism for detecting the hook state of the telephone set.

4. The device of claim 1, wherein said mediation mechanism includes a mechanism for detecting a control signal received from the telephone network.

5. The device of claim 4, wherein said control signal received from the telephone network indicates a ringing-on condition for the telephone set.

6. The device of claim 5, wherein said control signal received from the telephone network is a ringing tone signal outside said voice band.

7. The device of claim 6, wherein said mechanism for detecting said control signal received from the telephone network includes a band-pass filter with cut-on and cut-off boundaries matched with a frequency of said ringing tone signal.

8. The device of claim 5, wherein said control signal received from the telephone network is a DC current signal with a certain current level for indicating said ringing-on condition.

9. The device of claim 1, wherein said mediation mechanism includes a mechanism for activating said mechanism for generating said AC ringing voltage when:
(i) said control signal is received from the telephone network, and
(ii) the hook state of the telephone set is an on-hook state.

10. The device of claim 1, wherein said mediation mechanism includes a mechanism for introducing signals depending on the hook state of the telephone set into the line to the telephone network.

11. The device of claim 10, wherein said signals depending on the hook state of the telephone set introduced into the line to the telephone network include DC current signals.

12. The device of claim 10, wherein said signals depending on the hook state of the telephone set introduced into the line to the telephone network are tone signals outside said voice band.

13. The device of claim 1, wherein said power supply is adapted to power a subscriber interface circuitry in a network termination unit over the line to the telephone network.

14. The device of claim 1, wherein said power supply is adapted to receive power from an external electricity supply source.

15. The device of claim 14, wherein said external electricity supply source is an AC mains electricity supply.

16. The device of claim 14, further comprising:
(d) a mechanism for enabling the device to operate during power outages of said external electricity supply source.

17. The device of claim 16, wherein said mechanism for enabling the device to operate during power outages of said external electricity supply source includes a back-up battery.

18. The device of claim 17, further comprising:
(e) a mechanism for charging said back-up battery with power supplied by said external electricity supply source

19. The device of claim 1, 16 or 18, further comprising:
a mechanism for checking and indicating whether the device is in order.

20. The device of claim 19, wherein said mechanism for checking and indicating whether the device is in order includes an indicator light.

21. A method for coupling a telephone set, in a certain hook state, to a telephone network, comprising the steps of:
(a) providing:
(i) an isolation mechanism for coupling the telephone set to the telephone network only with respect to audio signals in a voice band; and
(ii) a mediation mechanism, coupled to said isolation mechanism, for mediating control signals between the telephone set and the telephone network;
(b) exchanging said audio signals between the telephone set and the telephone network via said isolation mechanism; and
(c) exchanging said control signals between the telephone set and the telephone network via said mediation mechanism.
